Europäisches Patentamt

European Patent Office

Office européen des brevets

(11) Veröffentlichungsnummer: **0 322 356**
A2

(12) **EUROPÄISCHE PATENTANMELDUNG**

(21) Anmeldenummer: 88810840.4

(22) Anmeldetag: 07.12.88

(51) Int. Cl.⁴: **G 01 C 3/08**
G 01 S 17/08

(30) Priorität: 19.12.87 DE 3743194
18.11.88 CH 4278/88

(43) Veröffentlichungstag der Anmeldung:
28.06.89 Patentblatt 89/26

(84) Benannte Vertragsstaaten:
AT BE CH DE ES FR GB GR IT LI LU NL SE

(71) Anmelder: BAUMER ELECTRIC AG
Hummelstrasse 17
CH-8500 Frauenfeld (CH)

(72) Erfinder: Scheck, Werner, Dr.
Am Schlossgut 7
D-8960 Kempten (DE)

Idler, Siegfried, Dipl.-Phys.
Dieselstrasse 15
D-8960 Kempten (DE)

Furrer, Bernhard
Arvenweg 11b
CH-8404 Winterthur (CH)

(74) Vertreter: Frei, Alexandra Sarah
Frei Patentanwaltsbüro Hedwigsteig 6 Postfach 95
CH-8029 Zürich (CH)

(54) **Verfahren und Vorrichtung zur optischen Distanzmessung.**

(57) Ein von einer Lichtquelle (21), insbesondere einer Laser-lichtquelle auf ein Messobjekt geworfener gebündelter Licht-strahl wird teilweise in die Messvorrichtung (20) zurückgewor-fen, durch einen Hohlspiegel (61, 81 ) fokussiert und durch einen Strahlteiler (26) in zwei Teilstrahlen (25, 25') zerlegt. In diesen Teilstrahlen sind Lichtdetektoren (28, 28'), welche in einer Dimension mindestens so ausgedehnt wie die Teilstrahlen sind, in Verschiedenen Abständen vom Strahlteiler (26) ange-ordnet, Aus dem Quotienten der Detektorsignale resultiert eine prinzipiell lineare Abhängigkeit zwischen dem Quotientensignal und der Distanz (15) der Messvorrichtung (20) zum Messobjekt (11).

FIG. 6

## Beschreibung

### Verfahren und Vorrichtung zur optischen Distanzmessung.

Die Erfindung liegt auf den Gebieten der geometrischen Optik, der Elektronik und der Signalverarbeitung. Sie betrifft ein Verfahren und eine Vorrichtung zum Messen der Distanz zwischen einem beleuchteten Punkt auf einem lichtreflektierenden Objekt und der Messvorrichtung. Die Erfindung beruht auf der Ausmessung der Intensitätsverteilung des fokussierten, diffus reflektierten Lichtstrahles in zwei voneinander verschiedenen Entfernungen vom beleuchteten Objekt, wobei sich der eine Lichtdetektor in der Fokallinie der Optik befindet. Die Lichtdetektoren sind in der gemeinsamen optischen Achse, aber in verschiedenen Abständen, angeordnet. Das wird durch Aufspaltung des diffus gestreuten Strahles in zwei Teilstrahlen mittels eines Strahlteilers möglich.

Optische Verfahren zur Messung von Distanzen sind wohlbekannt. So werden etwa Distanzmessungen elektrisch vorgenommen, indem die Laufzeit eines am Messobjekt reflektierten Lichtimpulses gemessen wird. Geräte, die nach diesem Prinzip arbeiten werden vornehmlich in der Landvermessung eingesetzt. Zur Messung von kurzen Distanzen im cm- und dm-Bereich ist dieses Verfahren aufwendig, da die kurzen Laufzeiten im ns-Bereich sehr rasche elektro-optische und elektrische Schaltelemente erfordern.

Bezüglich Aufwand besser geeignet für Messungen im dm-Bereich ist das Triangulationsverfahren. Dasselbe beruht darauf, dass zunächst auf dem Messobjekt durch einen von der Messvorrichtung ausgehenden scharfen Lichtstrahl ein Leuchtfleck erzeugt wird. Derselbe wird auf mindestens eine Lichtdetektorvorrichtung, die gegenüber dem Primärstrahl geneigt angeordnet ist, abgebildet. Aus dem Winkel zwischen dem Primärstrahl und dem Verbindungsstrahl Leuchtfleck-Bildpunkt lässt sich trigonometrisch der Abstand zwischen der Messvorrichtung und dem Objekt ermitteln.

Um beim Triangulationsverfahren eine genaue Winkelbestimmung zu gewährleisten, muss der Leuchtfleck auf der Objektfläche mittels einer Linse scharf auf die Lichtdetektorvorrichtung, beispielsweise einen Diodenarray, abgebildet werden. Bei fester Linseneinstellung ist damit nur in einem engen Distanzbereich eine hohe Messgenauigkeit erreichbar - es sei dann, dass die Optik in einem Iterationsverfahren ständig nachjustiert wird, was allerdings mit erheblichen Mehraufwand verbunden ist.

Ein weiteres optisches Distanzmessprinzip beruht auf der Vermessung der diffusen Lichtstreuung eines Leuchtfleckes, der auf dem Objekt mittels eines eng gebündelten Lichtstrahl erzeugt worden ist.

Unter der Voraussetzung, dass von diesem Lichtfleck rein diffus gestreutes Licht ausgeht, ist die Abstrahlung senkrecht zur Objektfläche näherungsweise homogen (Lambert-Strahlung). In diesem Strahl, der gegebenenfalls mittels einer Kollimatorlinse fokussiert wird, sind in verschiedenen Abständen zwei Lichtdetektoren angeordnet. Aus den gemessenen Beleuchtungsstärken lassen sich daher der Divergenz- resp. Konvergenz-Winkel des Strahles bestimmen. Damit ist aber aufgrund des "Lichttechnischen Entfernungsgesetzes" - also dem Umstand, dass die Strahlungsstärke einer punktförmigen Quelle umgekehrt proportional zum Quadrat des Abstandes ist - auch der gesuchte Objektabstand gegeben.

Verfahren solcher Art sind bekannt, wie die nachfolgend beschriebenen Patentschriften zeigen:

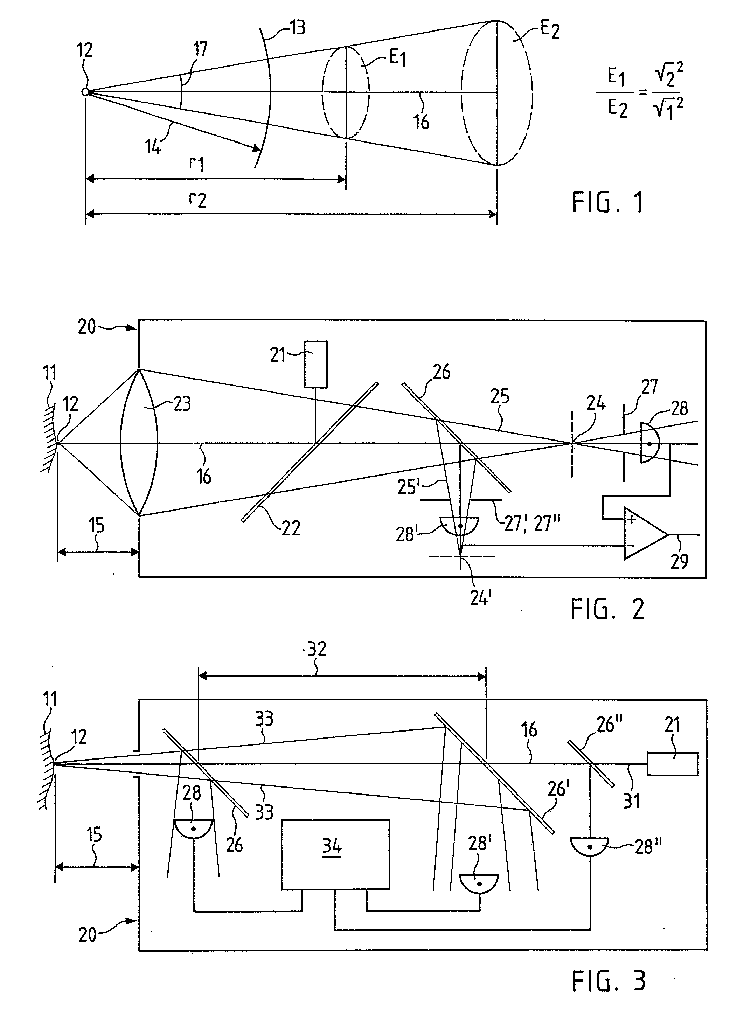

In der US-Patentschrift 3,719,421 wird von J.-L. Poilleux und J. Tourret ein Verfahren beschrieben, bei dem auf dem Objekt mittels einer Optik ein Leuchtfleck erzeugt und anschliessend abgebildet wird. Zwei hinter, resp vor dem Bildpunkt angeordnete Blenden mit Detektoren gestatten durch Differenzbildung der Detektorsignale innerhalb eines beschränkten Bereiches eine Distanzbestimmung. Das Verfahren eignet sich wohl zur genauen Abstandserkennung innerhalb enger Schranken, nicht aber generell für eine Abstandsmessung. Ausserhalb des erwähnten, Bereiches ist sogar die Zuordnung des Detektorsignals zum Objekt-Messvorrichtungs-Abstand mehrdeutig. Auf den detaillierten Aufbau der Vorrichtung wird später, im Zusammenhang mit Fig.2, eingegangen.

Ein Notwendiges Kriterium für die Zuverlässigkeit diese Verfahrens ist das Vorliegen diffuser Rückstrahlung. Findet nebst der diffusen Streuung auch Reflexion statt, so treten Messfehler auf. In der US-Patentschrift sind Massnahmen beschrieben, welche die entsprechende Messgenauigkeit erhöhen.

Ein weiteres Verfahren, bei dem sich die Distanzmessung auf das "Lichttechnische Entfernungsgesetz" abstützt, ist in der DDR-Patentschrift Nr. 65 320 von E.H. Mehnert beschrieben worden. In jener Veröffentlichung wird der Abstand von einer punktförmigen Licht quelle dadurch bestimmt, dass die Beleuchtungsstärken zweier in verschiedenen Abständen von der Lichtquelle befindliche Flächen gemessen werden.

Zur Durchführung des Verfahrens werden drei verschiedene Vorrichtungen aufgeführt. Eine derselbe beruht auf der Ausmessung einer grossflächig beleuchteten Oberfläche mittels zweier hinter Teleoptiken angeordneten Lichtdetektoren, die sich in verschiedenen Abständen vom Objekt befinden. Die Teleoptik gestattet zwar die scharfe Abbildung nur eines kleinen Gebietes des Objektes auf die Detektorfläche; bei Verschiebung des Objektes wird aber nur der Objektfleck unscharf auf den Detektor abgebildet, nicht aber die Beleuchtungsstärke des Bildes verändert - es sei denn das Objekt sei sehr klein, also bereits ein kleiner Lichtfleck. Damit ist die Vorrichtung (nach den Ansprüchen 2 und 3 der erwähnten Patentschrift) nicht funktionsfähig.

Bei einer zweiten Vorrichtung wird von einer Infrarot-Diode als Lichtquelle, also einem kleinen Lichtfleck auf dem Objekt ausgegangen. Die Strahlung dieser Lichtquelle wird von mindestens einem Lichtempfänger gemessen. Bei Konstanthaltung der emittierten Intensität des Lichtsenders lässt sich der Abstand der Vorrichtung von der Infrarot-Diode aus dem "Lichttechnischen Entfernungsgesetz" direkt bestimmen. Liegen zwei Lichtempfänger, die in der optischen Achse, aber in verschiedenem Abstand angeordnet sind, vor, was sich beispielsweise mittels halbdurchlässiger Spiegeln bewerkstelligen lässt, so ist die Abstandsbestimmung nicht von der Strahlungsstärke der Lichtquelle abhängig.

Die Beziehung zwischen der gemessenen Beleuchtungsstärken der Lichtdetektoren und dem Abstand ist nicht linear, sondern quadra tisch. Mittels moderner digitaler Signalverarbeitungsmitteln ist die Auflösung des "Lichttechnischen Entfernungsgesetzes" nicht schwierig. Es ist allerdings festzuhalten, dass im Gegensatz zu einem linearen Verhalten zwischen Messgrösse und Abstand, der Messfehler nicht konstant ist, sondern als erste Ableitung linear von der Abweichung vom Sollwert abhängt.

Weiterhin besitz diese zweite Ausführungsform der Vorrichtung den Nachteil, dass die Infrarot-Diode genau in der optischen Achse der Lichtempfänger liegen muss. Andernfalls kann das Lichtdetektorsignal nicht mehr eindeutig dem Objektabstand zugeordnet werden.

Diesem letzteren Umstand Rechnung tragend, ist in einer dritten Ausführungsform vorgesehen, dass die Lichtquelle, insbesondere eine Laser, direkt in der optischen Achse der Messapparatur angeordnet ist. Auf den prinzipielle Aufbau der Vorrichtung wird, angelehnt an Fig. 3, später eingegangen. Es sei aber bereits an dieser Stelle erwähnt, dass auch bei dieser dritten Ausführungsform der Zusammenhang zwischen Detektorsignalen und dem Objektabstand nicht-linear ist, was die Auswertbarkeit und die Messgenauigkeit wesentlich beeinflusst.

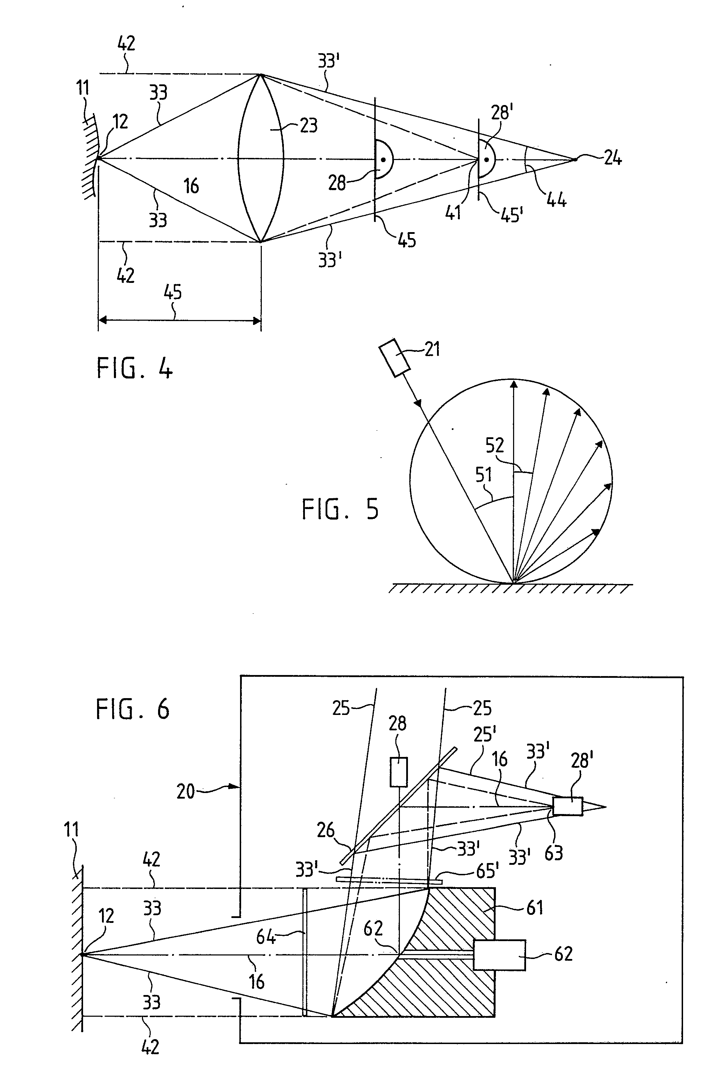

Ein drittes, auf dem "Lichttechnischen Entfernungsgesetz" beruhendes Verfahren ist Gegenstand der Deutschen Patentanmeldung Nr. P 37 43 194.3 vom 19. Dezember 1987. Nach demselben wird die Abstandsinformation ebenfalls der Beleuchtungsstärke von zwei in verschiedenem Abstand vom Objekt entfernten Lichtdetektoren entnommen. Die vom beleuchteten Lichtfleck ausgehende diffuse Strahlung wird mittels einer Optik fokussiert. Allerdings wird die Fokussierung nicht mittels eines Objektivs zweidimensional, wie es von J.-L. Poilleux und J. Tourretin der US-Patentschrift 3,719,421 beschrieben wurde, sondern mittels eines zylindrischen Spiegels nur eindimensional vorgenommen. Die Lichtdetektoren, wovon der eine bei der Fokallinie der Zylinderoptik angebracht ist, erfassen in einer Dimension den vollen in die Vorrichtung eintretenden Lichtstrahl. Diese Ausführungsform steht in wesentlichem Unterschied zur DDR-Patentschrift Nr. 65 320 von E.H. Mehnert, wo keine eindimensionalen Fokussierung vorliegt und die Lage der Detektoren nicht näher spezifiziert ist. Aus dem neuen Verfahren resultiert eine prinzipiell lineare Abhängigkeit der zu messenden Entfernung vom Quotienten der gemessenen Detektorsignale. Die diesem Verfahren zugrunde liegende Vorrichtung wird im Zusammenhang mit Fig. 6 näher erläutert.

Es ist die Aufgabe der Erfindung, das bekannte, auf dem "Lichttechnischen Entferungsgesetz" basierende Verfahren der vorgängig beschriebenen Art derart auszubilden, dass ein Ausgangssignal erzeugt wird, welches linear von der zu messenden Entfernung abhängig ist, um einen echten Entfernungsmesser zu realisieren. Weiterhin soll für einen vorgegebenen Messbereich die Messgenauigkeit optimal sein.

Die Aufgabe wird dadurch gelöst, dass das vom Objekt, nach Einfall eines enge gebündelten Parallelstrahles, reflektierte Lichtbündel in der optischen Vorrichtung fokussiert wird und dass die Messung der Strahlintensität eines Teilstrahles in der Fokalebene der Optik erfolgt. Die Lichtdetektoren sind in einer Dimension gleich oder grösser als der Strahldurchmesser bemessen.

Das neue Verfahren und Beispiele entsprechender Vorrichtungen werden anhand der folgenden Zeichnungen erläutert:

Fig. 1 zeigt eine Prinzip-Darstellung des "Lichttechnischen Entfernungsgesetzes",

Fig. 2 veranschaulicht eine erste auf dem "Lichttechnischen Entfernungsgesetz" beruhende, bekannte Messvorrichtung,

Fig. 3 veranschaulicht eine zweite auf dem "Lichtechischen Entfernungsgesetz" beruhende, bekannte Messvorrichtung,

Fig. 4 ist eine Prinzip-Darstellung der erfinderischen Vorrichtung,

Fig. 5 veranschaulicht das Lambert'sche Gesetz der diffusen Lichtstreuung,

Fig. 6 zeigt eine erste Ausführungsform der nach dem erfinderischen Verfahren konstruierten Vorrichtung,

Fig. 7 veranschaulicht des Strahlengang im Grund- Und Aufriss der Vorrichtung mit zylindrischem Konkavspiegel und

Fig. 8 ist die entsprechende Darstellung einer Ausführungsform mit einem Bifokalspiegel,

Fig. 9 zeigt die Intensitätsverteilung in Funktion des Beobachtungswinkels einer punktförmig beleucheten, teilweise reflektierenden Fläche,

Fig.10 stellt die Lichtreflexion an einem Spiegel in Funktion des Neigungswinkels für parallel und senkrecht zur Spiegelfläche polarisiertes Licht dar,

Fig.11 zeigt eine zweite Ausführungsform der erfinderischen Vorrichtung, bei der die Polarisationseigenschaft des strahlteilenden Spiegels weitgehend eliminiert ist,

Fig.12 erklärt als dritte Ausführungsform das Prinzip des Neutralpunkt-Messverfahrens,

Fig.13 zeigt eine Distanzmessung einer stark polarisierenden Oberfläche in Funktion des Neigungswinkels der Fläche,

Fig.14 zeigt eine vierte Ausführungsform der erfinderischen Vorrichtung, bei der Polarisatoren oder Lamda-Viertel-Platten in Bewegung versetzt sind.

Fig. 1 veranschaulicht das "Lichttechnische Abstandsgesetz". Dasselbe beruht auf der Tatsache, dass die totale, eine Kugelfläche durchdringende Lichtmenge, welche von einer Punktlichtquelle 12 im Zentrum dieser Kugel ausgeht, beim Wegfallen von Absorption unabhängig vom Kugelradius 14 ist. Für isotrope Abstrahlung der Lichtquelle 12 resultiert daraus, dass die Beleuchtungsstärke E eines Kugelflächenstückes umgekehrt proportional zum Radiusquadrat der Kugel ist.

Bei bekannter und isotroper Abstrahlung lässt sich somit aufgrund der Beleuchtungsstärke an einem Detektor der Abstand dieses Detektors von der Lichtquelle bestimmen. Wird ein diffus streuendes Objektes punktförmig beleuchtet, so ist die Isotropie innerhalb eines kleinen Betrachtungswinkels 17 annähernd gewährleistet. Demzufolge lässt sich auf der Grundlage des "Lichttechnische Abstandsgesetzes" eine Distanzmessvorrichtung konstruieren.

Fig. 2 zeigt eine bekannte Ausführungsform eines Verfahrens, das sich auf das "Lichttechnische Abstandsgesetzes" abstützen:

Die US-Patentschrift 3,719,421 wurde vorgängig kurz erwähnt. Bei derselben wird zunächst das Objekt 11 mittels einer Optik, bestehend aus einem halbdurchlässigen Spiegel 22 und einem Objektiv 23, punktförmig beleuchtet und dieser Lichtfleck 12 mit demselben Objektiv 23 auf den Bildpunkt 24 abgebildet. Die Strahlung, die vom Lichtfleck 12 ausgeht, wird durch den strahlaufspaltenden Spiegel 26 in zwei Teilstrahlen 25, 25' zerlegt und dieselben in einer ersten Ausführung auf zwei Lochblenden 27, 27' gerichtet. Die eine dieser Blenden 27' ist vor, die andere 27 hinter den Bildpunkten 24,24' angeordnet. Die Strahlungsflüsse, welche die Blenden 27, 27' durchdringenden, werden mittels zweier Lichtdetektoren 28, 28' gemessen und die Differenz 29 der entsprechenden elektrischen Signale gebildet. Bei gleich grossen Oeffnungen der Blenden 27, 27' und entgegengesetzt gleichen Abständen der Blenden von den Punkten 24, 24', sind die Lichtflüsse gleich gross und somit verschwindet die Signaldifferenz 29. Aendert sich der Abstand 15 des Objektes 11 von demjenigen der Messvorrichtung 20, so verschiebt sich auch die Lage der entsprechenden Bildpunkte 24, 24'. Es ändern sich deren Abstände zu den Blenden 27,27' und damit auch die auf die Detektoren 28, 28' auftreffenden Lichtmengen. Dies führt zu einer Aenderung des Differenzsignales 29, das ursprünglich null war. In einem kleinen Bereich ist das Differenzsignal 29 linear vom Objekt-Objectiv-Abstand 15 abhängig, nämlich dann, wenn die Abstände zwischen den Bildpunkten 24,24' und den Blenden 27, 27' näherungsweise entgegengesetzt gleich sind. Nähert sich hingegen einer der Bildpunkte 24, 24' einer der Blenden 27, 27' so strebt die Differenz 29 gegen ein Maximum und fällt nachher wieder ab.

Damit eignet sich das in der US-Patentschrift 3,719,421 beschriebene Verfahren wohl zur genauen Erkennung des Abstandes eines Objektes von einer Messvorrichtung in einem beschränkten, vorgegebenen Bereich, nicht aber generell für eine Abstandsmessung. Ausserhalb des erwähnten, engen Bereiches ist sogar die Zuordnung des Differenzsignales zum Objekt-Messvorrichtungs-Abstand mehrdeutig.

Die Strahlungsstärke des streuenden Lichtpunktes 12 auf der Objektoberfläche 11 ist stark von deren Beschaffenheit abhängig. Damit ist aber auch die Signaldifferenz 29, von der objektabhängig. Aus der Grösse 29 lässt sich somit zwar innerhalb eines beschränkten Distanzbereiches 15 eine Aussage daüber machen, in welcher Richtung die tatsächliche Lage sich von einem Sollwert unterscheidet, nicht aber über die effektive Grössen der Lageabweichung. Mit diesem Verfahren ist es also nicht möglich, ein Messgerät herzustellen, das ein Ausgangssignal zur Verfügung stellt, aus dem sich die tatsächliche Entfernung zum Objekt ermitteln lässt.

Das beschriebene Distanzmess-Verfahren beruht auf einer Intensitätsmessung des vom Objekt 11 rückgesteuten Lichtes. Ein Notwendiges Kriterium für die Zuverlässigkeit diese Verfahrens ist das Vorliegen möglichst diffuser Rückstrahlung. Findet nämlich zusätzlich zur diffusen Streuung Reflexion statt, so hängt die Signaldifferenz 29 stark von der Neigung der Oberfläche des Objektes 11 im Lichtpunkt 12 gegenüber der optischen Achse 16 der Messvorrichtung 20 ab. Durch Ersetzten einer der beiden Blenden 27' durch einen Spiegel mit einer zentralen Abschirmung 27" - eine weitere Ausführungsform der Erfindung - kann der Messfehler für nichtdiffuse Rückstrahlung bei gleichzeitiger Neigung der Objektoberfläche 11 erniedrigt werden.

Fig. 3 zeigt ein weiteres bekanntes Verfahren, bei dem sich die Distanzmessung auf das "Lichttechnische Entfernungsgesetz" abstützt. Dasselbe in der DDR-Patentschrift Nr. 65 320 von E.H. Mehnert beschrieben. Auf zwei Ausführungsformen wurde bereits eingegangen.

Bei einer dritten Ausführungsform ist vorgesehen, dass die Lichtquelle 21 in form eines Laser-Lichtsenders in der optischen Achse 16 der Messapparatur 20 angeordnet ist, was wiederum mittels strahlteilenden Spiegeln 26, 26' 26" möglich ist. Da die Laser-Lichtquelle 21 ein enges Lichtbündel 31 abgibt, kommt auf dem Objekt ein punktförmiger Lichtfleck 12 zustande, der die optischen Achse 16 der Messvorrichtung definiert. Zwei Lichtempfänger 28, 28' befinden sich ebenfalls in dieser optischen Achse 16, sind aber in verschiedenem 32 Abstand in dem vom Lichtfleck ausgehenden Lichtstrahl 33 angeordnet. Dies ist dank der Einfügung von zwei strahlteilenden Spiegeln 26, 26' möglich. Die Laserleistung wird durch Auskopplung eines dritten Teilstrahles 26 " und mittels eines zusätzlichen Lichtdetektors 28" kontrolliert.

Die Beziehung zwischen der gemessenen Beleuchtungsstärken der Lichtdetektoren 28, 28' und dem Abstand 15 ist nicht linear, sondern wegen des "Lichttechnischen Entfernungsgesetzes" quadratisch von den Detektorsignalen abhängig. Digitaler Signalverarbeitungsmittel 34 gewährleisten eine leichte Auflösung des entsprechenden Gleichungssystems. Es ist allerdings festzuhalten, dass im Gegensatz zu einem linearen Verhalten zwischen Messgrösse und Abstand 15, der Messfehler nicht konstant ist, sondern linear von der Abweichung vom Sollwert abhängt - ein schwerwiegender Nachteil bei einem Distanzmessgerät.

Fig. 4 zeigt das Prinzip eines neueren Distanz-Messverfahrens, wie es auch in der Deutschen Patentanmeldung Nr. P 37 43 194.3 vom 19. Dezember 1987 beschrieben ist.

Das Distanz-Messverfahren beruht auf dem "Lichttechnischen Abstandsgesetz". Ausgegangen wird von der Ausmessung der Lichtin tensität eines diffus lichtstreuenden Lichtfleckes 12 auf der Oberfläche des Objektes 11. Der Lichtfleck 12 wurde durch Anordnung einer, in Fig. 4 nicht dargestellten, Laserlichtquelle 21 in der optischen Achse 16 erzeugt.

Die diffuse, vom beleuchteten Lichtfleck 12 ausgehende Strahlung 33, wird mit fokussierenden Mitteln, beispielsweise eines Objektivs 23 fokussiert 33'. Im konvergenten Strahl sind zwei Lichtdetektoren 28, 28' angeordnet. Der eine Lichtdetektor 28 befindet sich im aufgeweiteten Strahl, der andere, 28', im Brennpunkt 41 der Optik, d.h. in jenem Punkt in den ein paralleles Lichtbündel 42 fokussiert würde. Es wird vorausgesetzt, dass die Lichtintensitätsverteilung im kollimierten Strahl 33' homogen ist. Unter dieser Annahme lässt sich aus der gemessenen Lichtintensität der Konvergenzwinkel 44 des Strahles 33' bestimmen. Damit ist aber aufgrund der Linsengleichung auch die gesuchte Gegenstandsweite 45 gegeben.

Wichtigste Voraussetzung für das Funktionieren des Verfahrens ist damit das Vorhandensein möglichst unstrukturierter, konstanter diffuser Lichtstreuung am Objekt 11. Im Idealfall Lambert'scher Rückstrahlung ist die Homogenität der Abstrahlung über einem grösseren Winkelbereich gewährleistet, wie das Fig. 5 zeigt. Der Lichtstrahl, beispielsweise einer Laserlichtquelle 21 fällt unter dem Winkel 51 ein und wird unter dem variablen Winkel 52 betrachtet. Das Lambert'sche Gesetz besagt, dass die unter dem Beobachtungswinkel 52 gemessene Strahlung durch einen konstanten Wert, dividiert durch den Cosinus dieses Winkels 52, gegeben ist.

Fig. 6 zeigt eine Ausführungsform des Verfahren, nach der Prinzip-Darstellung von Fig. 5. Als wesentlicher Unterschied sind zur Reali sierung der axialen Anordnung der Laserlichtquelle und der Detektoren Spiegel eingeführt.

Der von der Lichtquelle, insbesondere einer Laserlichtquelle 21, auf dem Objekt 11, nach Durchdringen, 61, des Hohlspiegels erzeugte Lichtfleck 12 gibt diffuse Strahlung ab. Ein Teil davon, dargestellt durch das Strahlbündel 33, gelangt in die Distanzmessvorrichtung 20 und wird durch den Hohlspiegel 61, 81 fokussiert, 33'. Die Fokussierung geschieht allerdings nicht mittels eines Objektivs 23 in zwei Dimensionen, sondern wird beispielsweise durch einen zylindrischen Parabolspiegel 61 nur eindimensional vorgenommen. Die Laser-Lichtquelle 21, sowie zwei Lichtdetektoren 28, 28' befinden sich in derselben optischen Achse 16, was durch Anordnung eines strahlaufspaltenden Spiegels 26 ermöglicht wird. Der eine der Detektoren, 28', ist in der Fokallinie 63 des Zylinder-Parabolspiegels angeordnet, wobei die Fokallinie als der geometrische Ort 63 aller Punkte definiert ist, auf den ein in die Vorrichtung einfallender paralleler Lichtstrahl 42 abgebildet wird. Die Detektoren 28, 28' sind derart bemessen, dass sie in einer Dimension, der nicht fokussierten, den vollen in die Vorrichtung eintretenden Lichtstrahl erfassen können.

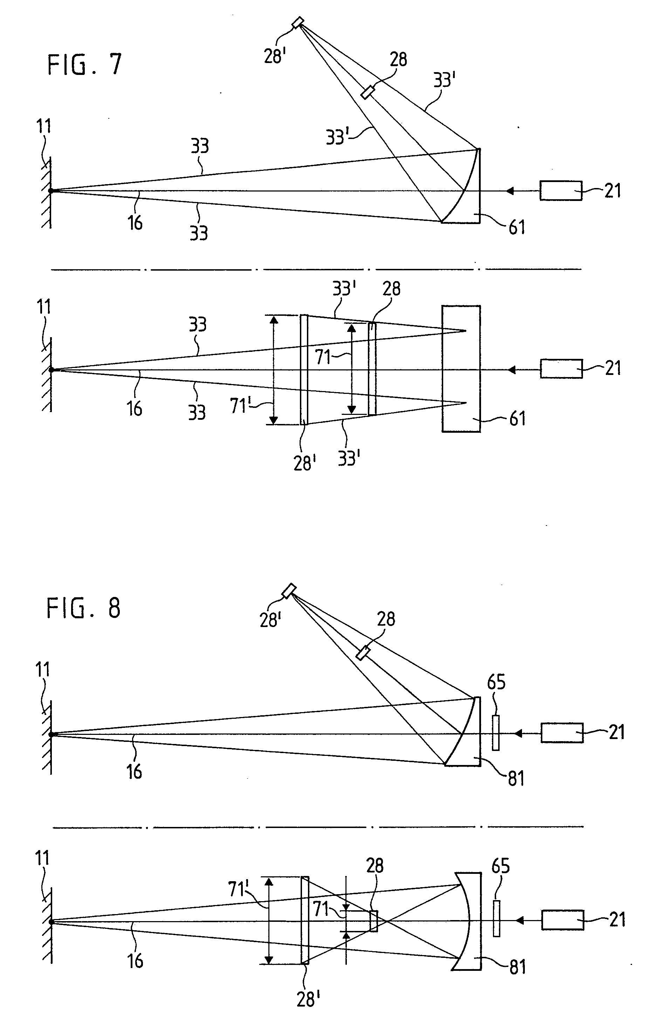

In Fig. 7 ist der zylindrische Parabolspiegel 61 und der entsprechende Strahlengang vor, 33, und nach, 33', der Reflexion am Spiegel 61 im Auf- und Grundriss dargestellt. (Der besseren Anschaulichkeit wegen wurde eine von 90° abweichender Reflexionswinkel gewählt.)

Aus dem Verfahren resultiert eine prinzipell lineare Abhängigkeit der zu messenden Entfernung von Quotienten der gemessenen Detektorsignale. Der funktionale Zusammenhang zwischen den Signalen $E_{28'}$ resp. $E_{28}$ an den Detektoren 28' resp. 28 und dem Abstand vom Lichtfleck 12 auf dem Objekt 11 ist durch die folgende Beziehung gegeben:

Abstand = $( E_{28'} / E_{28} ) * C_1 - C_2$

wobei die beiden Konstanten $C_1$ und $C_2$ gerätespezifisch und ausschliesslich von den in der optischen Achse gemessenen Abständen zwischen Lichtfleck 12 und den Detektoren 28 und 28' abhängig sind.

Falls das Signal am Lichtdetektor 28 auf einem festen vorgegebenen Wert gehalten wird, was mittels einer Regelung der Laserlichtquelle 21 möglich ist, vereinfacht sich die Abstandsformel weiter - es erübrigt sich eine Signaldivision.

Eine weitere Ausführungsform des erfinderischen Verfahrens ist in Fig. 8 dargestellt. Der vorgängig verwendete im zylindrische Parabolspiegel 61 ist durch einen Bifokal-Parabolspiegel 81 ersetzt.

Wie Fig. 7 zeigt, würde ein Zylinder-Parabolspiegel 61 sehr breite Lichtdetektoren 28, 28' erfordern. Zur Beschränkung der Breite 33' des reflektierten Strahles und somit auch zur Reduktion der Breite 71, 71' der Lichtdetektoren 28, 28' hat sich die Verwendung von bifokal fokussierenden Mitteln in Form eines Bifokal-Parabol-Spiegels 81 bewährt. Die Fokallänge bezüglich der Symmetrieebene wurde den geometrischen Gegebenheiten angepasst. In senkrechter Richtung zu dieser Symmetrieebene wurde hingegen die halbe Fokallänge von ersterer gewählt. Damit wird erreicht, dass der Strahl in senkrechter Richtung zur Symmetrieebene näherungsweise auf halbem Abstand zwischen dem Spiegel 81 und der aus Fig. 6 bekannten Fokallinie 63 (senkrecht zur Symmertieebe) des Hohlspiegels 81 fokussiert ist. Für die Breiten 71, 71' der Lichtdetektoren 28, 28' ergeben sich damit günstigere Dimensionen.

In Fig. 8 ist die Konstruktion der Distanz-Messvorrichtung mit einem Bifokal-Parabolspiegel 81 veranschaulicht. Bei einer Prototyp-Ausführung wurde ein Reflexionswinkel von 90 ° gewählt. Die beiden Fokallängen des Bifokal-Parabolspiegels betragen 5 cm und 2.5 cm.

Die vorgestellten, auf dem "Lichttechnischen Abstandsgesetz" beruhenden Distanz-Messverfahren sind unproblematisch, solange der Lichtfleck 12 auf dem Messobjekt 12 eine isotroper Strahler ist, also die abgestrahlte Lichtleistung in jedem Raumwinkelelement gleich ist. Für eine selbstleuchtende Lichtquelle trifft das näherungsweise zu. Ebenfalls ist diese Bedingung bei indirekter Beleuchtung weitgehend erfüllt, wenn das Objekt das einfallende Licht ideal diffus streut und die Flächennormale im Lichtfleck 12 mit der optischen Achse 16 der Messvorrichtung 20 zusammenfällt. Abweichungen von der idealen Lambert-Streuung (Fig. 5), wie Lichtreflexionen führen aber zu örtlichen Intensitätsfluktuationen in den Ebenen 45, 45' der Lichtdetektoren 28, 28' und somit zur Verfälschung der Distanzmessung.

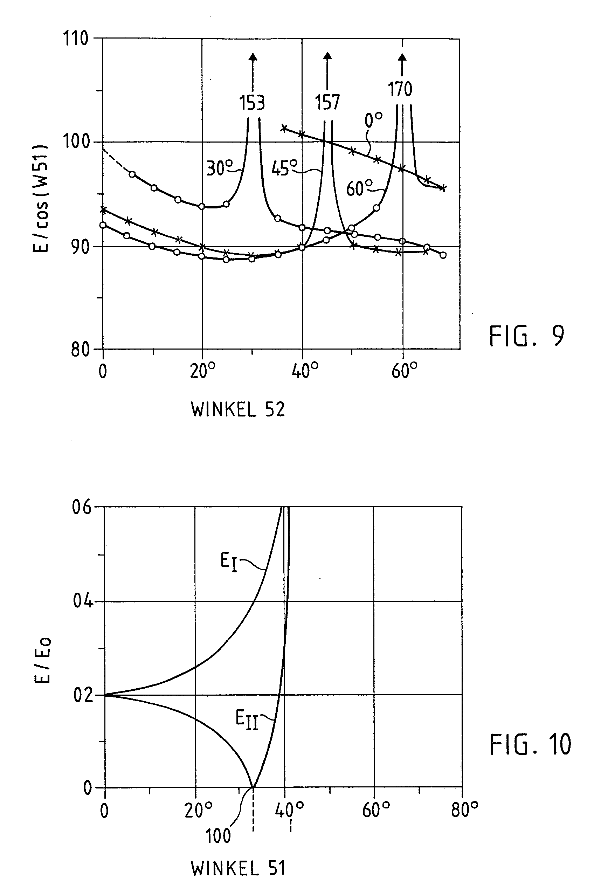

Fig. 9 zeigt den Glanzwinkeleffekt, also eine wesentliche Abweichung vom Lambert'schen Gesetz. Die Abstrahlung eines Leuchtfleckes, dividiert durch den Lichteinfallswinkel, ist für vier verschiedene Einfallswinkel 51 von 0°, 30°, 45° und 60° in Funktion des Beobachtungswinkels 52 aufgetragen. Es handelt sich bei der Probe um teilweise spiegeln-des, gepresstes BaSO4. Sehr deutlich ist für die verschiedenen Einfallswinkel der ausgeprägte Reflex vom diffusen Anteil unterscheidbar. Es ist einleuchtend, dass solche Reflexe, auch wenn der Lichteinfallswinkel 51 nicht dem Beobachtungswinkel 52 ent spricht, zu grossen Verfälschungen der Intensitäts-Messung und somit zu Fehlinterpretationen der Objektweite führen können. Es musste deshalb nach Wegen gesucht werden, diesen störenden Effekt von der rein diffusen Streuung abzutrennen.

Wie aus der US-Patentschrift 3,719,421 von J.-L-Poilleux and J. Tourret hervorgeht, wurde dieses Problem durchaus erkannt. Es wurden auch entsprechende Gegenmassnahmen beschrieben, die auf einer Modifikation der Geometrie des Strahlenganges beruhen - der Ersatz der Blende 27' durch einen Schirm 27" im Zentrum des Strahles 25'.

Eine andere Methode zur Behebung der Verfälschung der Distanzmessumg beruht in einer Nutzung (siehe auch BRD-Patentanmeldung Nr. P 37 43 194.3) der Polarisationseigenschaften der vom Lichtfleck 12 emittierten Strahlung. Es wird dabei davon ausgegangen, dass bei der Reflexion die Polarisation des einfallenden Strahles erhalten bleibt, während die diffuse Streuung weitgehend unpolarisiert ist. Es ist allerdings festzuhalten, dass weder parallel, noch senkrecht zur Einfallsebene polarisiertes Licht bei der diffusen Streuung vollständig depolarisiert wird. (G.Kortüm, "Reflexionsspektroskopie", Springer Verlag 1969, p 38). Dieser Effekt ist allerdings im allgemeinen sehr klein.

Eine effiziente Abkopplung des reflektierten Strahlungsanteils kann mittels eines, aus einem Linear- und Zirkular-Polarisator bestehenden, optischen Isolator 64 erreicht werden (Fig. 6). Mit dieser Massnahme wird zunächst der Primärstrahl in der einen Richtung zirkular polarisiert und der Anteil der in der Gegenrichtung zirkular polarisierten Strahlung gemessen.

Für den Fall, dass die Lichtquelle selber bereits polarisiertes Licht abgibt, was für Laserlichtquellen 21 teilweise zutrifft, kann die Abtrennung des unerwünschten reflektierten vom erwünschten diffus gestreutem Strahl auf einfachere Weise durch Einfügung eines Polarisators 65', der nach dem Hohlspiegel 61, 81 angeordnet ist, vorgenommen werden. Vorteilhafterweise werden die Polarisationsrichtungen der Laserlichtquelle 21 und des Polarisators 65 zueinander senkrecht gewählt. Weiterhin ist es empfehlenswert, die Polarisationsrichtung des Lasers um 45° gegenüber der Symmetrieebene des Hohlspiegels zu verdrehen. In diesem Falle der Senkrecht-Anordnung der beiden Polarisatoren ist auch nur die -45° verdrehte Komponente des zurückgeworfenen Lichtes von Interesse.

Im Zusammenhang mit der Erläuterung von Fig. 6 wurde festgehalten, dass es für die Auswertung vorteilhaft ist, das Signal am Lichtdetektor 28 auf einem festen vorgegebenen Wert zu halten, was mittels einer Regelung der Laserlichtquelle 21 möglich ist. Diese Massnahme bewirkt natürlich, dass die Quelle 21 je nach Abstand 15 und Beschaffenheit der Objektoberfläche 11 bei sehr verschiedenen Leistungen betrieben werden muss. Es resultieren daraus Probleme, die im folgenden erläutert werden:

Der Polarisationsgrad von polarisiert betriebenen Halbleiterlasern ist leistungsabhängig. So ist der emittierte Strahl eines typischen, bei 780 nm arbeitenden, GaAS-Laser bei Volleistung zu 95 % polarisiert, bei reduzierter Leistung kann sich der Polarisationsgrad bis auf 70 % erniedrigen. Das bedeutet, dass bei niedriger Laserleistung, also bei grossem Objektabstand 15 oder starker Absorption der Objektoberfläche 11, der reflektierte vom diffus gestreuten Strahlungsanteil nicht mehr effizient abgetrennt ist. Gegebenenfalls kann dieses Problem durch Ersatz des polarisierten Lasers 21 durch eine unpolari sierte Laserlichtquelle mit einem Polarisator 65 (Fig. 8) behoben werden.

Wird ein Halbleiterlaser elektrisch belastet, so ändert sich nicht nur seine optische Ausgangsleistung, sondern infolge der Temperaturabhängikeit des Bandabstands auch leicht seine Emissionswel-lenlänge. Infolge einer schwachen Wellenlängenab-hängigkeit des Transmissions-resp. Reflexions-Vermögen des Strahlteiler 26 ist damit die Aufspaltung des einfallenden Strahles 33 in die beiden Teilstrahlen 25, 25' leicht von der Leistung der Laserlichtquelle 21 abhängig. Diese Aenderung des Intensitäts-verhältnisses wird beim vorliegenden Messverfah-rens als Distanzänderung des Objektes von der Messvorrichtung interpretiert. Diesem Messfehler kann durch sorgfältige Wahl des Strahlteilers 26 weitgehend Rechnung getragen werden.

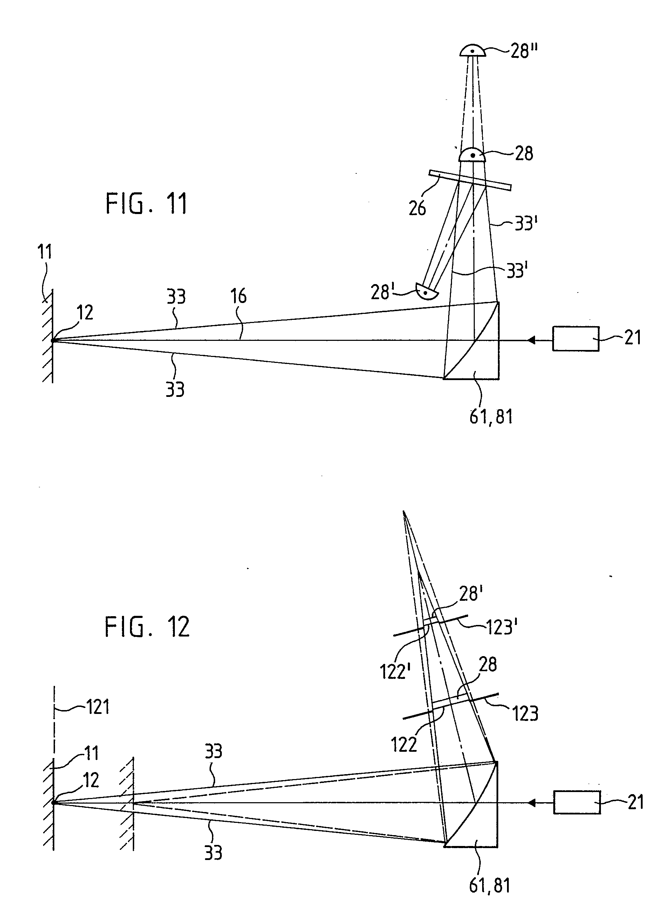

Die leistungsbedingte Aenderung des Polarisierungsgrades des Halbleiterlasers kann beim Auftreten von Reflexion im Lichtfleck 12 auf eine weitere Art einen Distanzmessfehler bewirken: Die parallel und senkrecht zur Lichteinfallsebene polarisierten Komponenten des einfallenden Lichtstrahles 33 werden nicht zu gleichem Anteil am Strahlteiler reflektiert, wie das in Fig. 10 dargestellt ist. Insbesondere verschwindet die Reflexion des parallel zur Lichteinfallsebene polarisierten Strahles beim sog. Brewsterwinkel 100, während der senkrechte Anteil bei Zunahme den Lichteinfallswinkels stetig zunimmt. Diese Fehlerquelle lässt sich allerdings leicht beheben, da der reflexionsbedingte Polarisationseffektfür kleine Einfallswinkel, wie Fig. 10 zeigt, nur schwach in Erscheinung. Aus diesem Grunde ist es naheliegend, den Strahlteiler 26 - im Gegensatz zu Fig. 6 - nicht unter 45 °, sondern unter kleinen Winkel anzuordnen, wie das in Fig 11 dargestellt ist.

Oft, beispielsweise in der Robotik, ist es von grossem Interesse, dass die Distanzmessumg in einem vorgegebenen Bereich sehr genau ist.

Für diesen Fall ist die Ausführungsform des Distanzmessverfahrens mit sog. Neutralpunkt 121 sehr geeignet. Es geht dabei darum, für einen Distanz-Sollwert die beiden Detektorflächen, sowie die Position der Lichtdetektoren 28, 28′ derart festzulegen, dass die Begrenzung des konvergenten, vom Hohlspiegel 61, 81 eingefangenen Messstrahles genau mit der Berandung der lichtempfindlichen Schicht der Detektoren 28, 28′ übereinstimmt. In Fig. 12 ist diese Ausführungsform dargestellt, wobei der besseren Anschaulichkeit wegen der Strahlteiler 26 weggelassen worden ist.

Abstandsmessungen im Bereiche des Neutralpunktes 121 sind nun völlig unabhängig von der Homogenität der Ausleuchtung der Detektorfläche, da die Detektoren genau den, durch Rückstreuung und Reflexion bedingten Strahlungsfluss erfassen und sich damit Strahlungs-Inhomogenitäten überhaupt nicht auswirken können.

Statt die Fläche und die Form der Lichtdetektoren 28,28′ dem Strahlengang 33, 33′ für den Neutralpunkt 121 genau anzupassen, ist es empfehlenswert, identische Detektoren zu verwenden und deren aktive Flächen 122, 122′ mittels Blenden 123, 123′ auf den vorgegebenen Wert zu beschränken. Der Einsatz identischer Detektoren ist schon wegen der Gewährleistung gleicher Empfindlichkeit, Temperaturabhängigkeit und Alterung vorteilhaft.

Wegen der hohen Lichtintensität und der guten Strahlbündelung ist zur Erzeugung des Lichtfleckes 12 auf dem Objekt 11 sicherlich eine Laserlichtquelle 21 bestens geeignet. Allerdings bringt die hochchromatische Strahlung dieser Quellen Nachteile. Die kleine Bandbreite des Lasers bedeutet auch eine grosse Kohärenzlänge. Bei Halbleiterlasern beträgt diese typischerweise 0.1 - 0.5 mm. Diese grosse Kohärenzlänge bewirkt, dass die reflektieren und gestreuten Strahlen im Lichtfleck über ein grösseres Gebiet des Lichtfleckes in Interferenz treten können. Die Folge davon sind für Laserlicht typischen Intensitätsfluktuationen, die als "körnige" Struktur der beleuchteten Oberfläche, sog. Speckles, in Erscheinung treten, Diese Speckels werden durch den Hohlspiegel 61,81 auf die lichtempfindlichen Gebiete 122, 122′ der Lichtdetektoren 28, 28′ abgebildet. Bei der Strahlbeschränkung durch die Berandung der Detektoren, resp. durch die Blenden, treten damit Intensitätsfluktuationen auf, die sich in einem Abfall der Messgenauigkeit manifestieren. Als Gegenmassnahme zu diesem Speckelseffekt ist es empfehlenswert, Lichtquellen mit kleiner Kohärenzlänge, also grosser Bandbreite zu verwenden. Beispielsweise ist es günstig, statt eines Monomode-Lasers, einen Multimode-Laser einzusetzen.

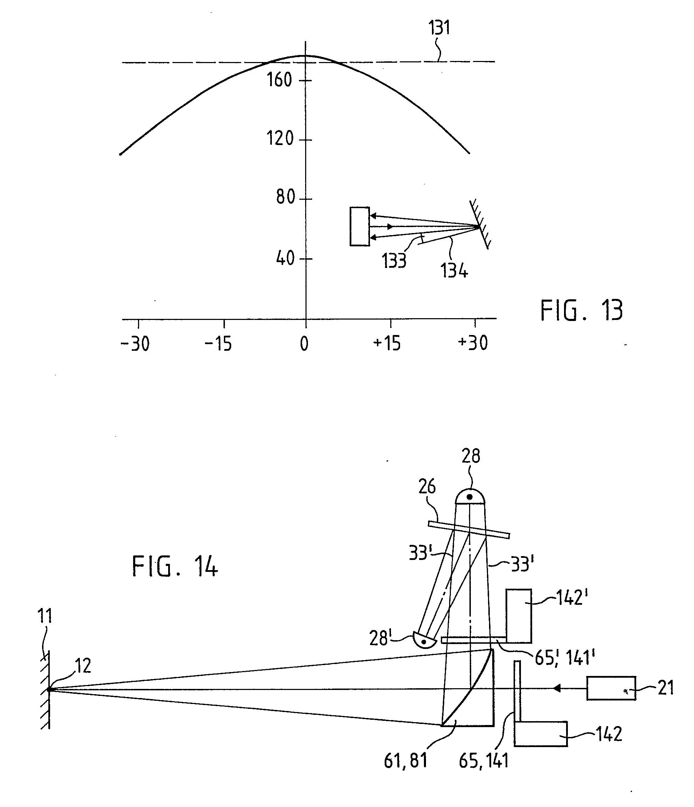

Der Glanzeffekt der Objektflächen, wie er in Fig 9 dargestellt ist, kann zu erheblichen Distanzungenauigkeiten führen, wie das etwa aus Fig. 13 ersichtlich ist. Für weisses, annähernd rein diffus streuendes Papier 131 ergibt sich für die Distanzmessung in Funktion des Neigungswinkels 133 der optischen Achse 16 gegenüber der Flächennormalen 134 eine sehr hohe Genauigkeit. Hingegen wurden bei derselben Messanordnung für schwarzes, matt glänzendes Papier 132 eine grossen Abhängigkeit in Funktion des Neigungswinkels 134 gefunden.

Da die Reflexion stark polarisationsabhängig ist, wie Fig. 10 veranschaulicht, ist es angezeigt, die Polarisationsrichtung der Laserlichtquelle 21 der Neigung der Objektfläche anzupassen. Beispielsweise kann das durch Minimalisierung des Reflexionsanteiles der zurückgeworfenen Strahlung 33 ermöglicht werden. Dieses Ziel kann dadurch erreicht werden, dass der Polarisator, resp der polarisierte Laser gedreht wird. Anhand der Variation der Polarisationsrichtung kann festgestellt werden, ob die Meeeobjekt-Oberfläche polarisierende Eigenschaften besitzt, also das auftreffende Licht teilweise nichtdiffus reflektiert. Falls die Polarisationsrichtungs-Variation verschwindet, ist keine polarisierte Strahlung vorhanden und damit die Distanzmessung zuverlässig. Für Nichtverschwinden des Signals kann beispielsweise eine Meldung ausgelöst, oder ein günstigerer Wert für die Lage der Polarisationsrichtung gesucht werden.

Es ist festzuhalten, dass nebst der Polarisationsebene der Laserlichtquelle 21, auch diejenige des reflektierten Strahles 33′ gedreht werden muss, sodass die beiden Polarisationsrichtungen weiterhin senkrecht zueinander stehen. Erstere Drehung kann beispielsweise durch Rotation der Laserlichtquelle 21 selbst, durch Drehung einer Lambda-Viertel-Platte 141′, eines Polarisators 65′, oder magnetisch über den Faraday-Effekt vorgenommen werden. Der Faradayeffekt ist allerdings wegen seiner Kleinheit problematisch, es sei denn dass eine lange Faraday-Zelle oder ein sehr hohes Magnetfeld verwendet wird. Zur Drehung der Polarisation des Strahles 33′ kommt eine Rotation des Polarisators 65, oder gegebenenfalls einer zusätzlichen Lambda-Viertel-Platte 141, in Frage. Der Antrieb der Lambda-Viertel-Platten 141, 141′ resp. der Polarisatoren 65, 65′ kann beispielsweise mittels der Motoren 142, 142′ vorgenommen werden.

Statt die Lambda-Viertel-Platten 141, 141′ resp. der Polarisatoren 65, 65′ einer kontinuierlichen Bewegung zu unterziehen, können sie auch in einen Vibrationszustand versetzt werden. Das Verschwinden eines Wechselsignal-Anteiles an den Lichtdetektoren 28, 28′ bedeutet, dass rein diffuse Lichtstreuung vorliegt und damit die Distanzmessung zuverlässig ist.

## Patentansprüche

1. Verfahren zur optischen Distanzmessung zwischen einer Messvorrichtung und einem Objekt, bei dem von einer Lichtquelle ein eng gebündelter Lichtstrahl von der Messvorrichtung auf das Objekt geworfen, das von der Messoberfläche reflektierte Licht durch ein optisches System der Messvorrichtung fokussiert und vor der Fokalebene durch einen Strahlteiler in zwei Teilstrahlen zerlegt wird, deren Strahlungsintensitäten mittels zweier Lichtdetektoren in der gemeinsamen optischen Achse, jedoch in unterschiedlichen Abständen vom Strahlteiler gemessen werden die Detektorströme als Funktion der zu messenden Distanz ausgewertet werden, dadurch gekennzeichnet,
- dass das von der Messoberfläche reflektierte Licht in die Messvorrichtung reflektierend fokussiert wird,
- dass die Messung der Strahlungsintensität eines der beiden Teilstrahlen in mindestens einer der Fokalebenen, welche als die Normalebene zur optischen Achse im Brennpunkt, resp. in der Brennlinie des zurückreflektierenden Mittels definiert ist, erfolgt und
- dass die Lichtdetektion entlang einer Dimension und mindestens in gleich grossem Masse wie der in die Messvorrichtung einfallende Lichtstrahl erfolgt.

2. Verfahren nach Anspruch 1, dadurch gekennzeichnet, dass das von der Messfläche zurückgeworfene Licht parabolisch fokussiert wird.

3. Verfahren nach einem der Ansprüche 1 oder 2, dadurch gekennzeichnet, dass das von der Messfläche zurückgeworfene Licht eindimensional fokussiert wird.

4. Verfahren nach einem der Ansprüche 1 oder 2, dadurch gekennzeichnet, dass das von der Messfläche zurückgeworfene Licht bifokalen fokussiert wird.

5. Verfahren nach einem der Ansprüche 1 bis 4, dadurch gekennzeichnet, dass die Lichtstärke der Lichtquelle in Abhängigkeit von der Distanz der Messvorrichtung vom Objekt und in Abhängigkeit von der Oberflächenbeschaffenheit des Objektes laufend derart geregelt wird, dass das Ausgangssignal im einem der beiden Lichtdetektoren konstant ist.

6. Verfahren nach Anspruch 5, dadurch gekennzeichnet, dass insbesondere der näher beim Strahlteiler liegende Lichtdetektor durch Regelung der Lichtstärke der Lichtquelle auf konstantem Wert gehalten wird.

7. Verfahren nach einem oder mehreren der Ansprüche 1 bis 6, dadurch gekennzeichnet, dass direkte Reflexe dadurch unterdrückt werden, dass der auf dem Objekt auftreffende Lichtstrahl polarisiert wird und bei der Detektion der beiden Teilstrahlen der, bei der direkten Reflexion erhaltene, Polarisationszustand eliminiert wird.

8. Verfahren nach Anspruch 7, dadurch gekennzeichnet, dass zur Unterdrückung direkter Reflexe der auf dem Objekt auftreffende Lichtstrahl bezüglich der Symmetrieebene des Hohlspiegels unter 45° polarisiert wird.

9. Verfahren nach einem oder beiden der Ansprüche 7 oder 8, dadurch gekennzeichnet, dass die Lichtquelle der Messvorrichtung polarisiertes Licht aussendet.

10. Verfahren nach einem oder mehreren der Ansprüche 1 bis 6, dadurch gekennzeichnet, dass direkte Reflexe durch ein, aus einem Linear- und einem Zirkular-Polarisator bestehendem, optischen Isolator unterdrückt werden, der im gemeinsamen Strahlenweg des ausgesendeten engen Strahlenbündels und des einfallenden Lichtbündels angeordnet ist.

11. Verfahren nach einem oder mehreren der Ansprüche 1 bis 10, dadurch gekennzeichnet, dass die durch Reflexion am Strahlteiler bewirkte Depolarisation der Teilstrahlen dadurch verhindert wird, dass das Licht annähernd senkrecht auf den Strahlteiler fällt.

12. Verfahren nach einem oder mehreren der Ansprüche 1 bis 11, dadurch gekennzeichnet, dass für den Fall, dass die Messfläche von der Messvorrichtung einen vorgegebenen Abstand hat, in der sog. Neutalbene liegt, die Berandung des vom Hohlspiegel fokussierten Strahles genau mit der Berandung der lichtempfindlichen Fläche der Lichtdetektoren übereinstimmen.

13. Verfahren nach einem oder mehreren der Ansprüche 1 bis 11, dadurch gekennzeichnet, dass für den Fall, dass die Messfläche von der Messvorrichtung einen vorgegebenen Abstand hat, in der sog. Neutralebene liegt, die Berandung des vom Hohlspiegel fokussierten Strahles genau mit der Berandung von Blenden, welche die lichtempfindlichen Fläche der Lichtdetektoren teilsweise abdecken, übereinstimmen.

14. Verfahren nach einem oder mehreren der Ansprüche 1 bis 13, dadurch gekennzeichnet, dass für den Fall, dass die Messfläche von der Messvorrichtung einen vorgegebenen Abstand hat, in der sog. Neutralebene liegt, die Berandung des vom Hohlspiegel fokussierten Strahles genau mit der Berandung der lichtempfindlichen Fläche des weiter vom Hohlspiegel entfernten Lichtdetektors übereinstimmt oder eine entsprechende Blende vorhanden ist.

15. Verfahren nach einem oder mehreren der Ansprüche 1 bis 9 und 11 bis 14, dadurch gekennzeichnet, dass die Polarisationsebenen des aus der Messvorrichtung austretenden Lichtstrahles und des vom fokussierenden Mittel reflektierten Lichtstrahles gedreht werden können, sodass der direkt von Messobjekt reflektierte Strahlanteil reduziert werden kann.

16. Verfahren nach Anspruch 15, dadurch gekennzeichnet, dass die Polarisationsebenen des aus der Messvorrichtung austretenden Lichtstrahles und des vom fokussierenden Mittel reflektierten Lichtstrahles in Vibrationsbewegung versetzt werden können, sodass die Abhängigkeit der Detektorsignale von der Polarisationslage der Polarisatoren ermittelt werden kann.

17. Vorrichtung zur Durchführung des Verfahrens nach Anspruch 1, bestehend aus einer Lichtquelle, welche einen eng gebündelten Lichtstrahl von der Messvorrichtung auf das Objekt werfen kann, einem, das von der Messoberfläche reflektierte Licht fokussierenden, optischen System, einem, vor der Fokalebene dieses optischen Systems angeordneter Strahlteiler, der den fokussierten Strahl in zwei Teilstrahlen zerlegt, zwei, die Strahlungsintensitäten der Teilstrahlen messenden Lichtdetektoren, die in der gemeinsamen optischen Achse, jedoch in unterschiedlichen Abständen angeordnet sind, sowie einer Auswertevorrichtung, welche den Quotienten der Detektorströme bildet,
dadurch gekennzeichnet,
- dass das fokussierende, optische System ein Hohlspiegel (61, 81) ist,
- dass einer der beiden Lichtdetektoren (28, 28') in mindestens einer der Fokalebenen (45, 45') des fokussierenden, optischen Systems (61, 81), welche als die Normalebene zur optischen Achse (16) im Brennpunkt, resp. in der Brennlinien (63) des optischen Systems (61, 81) definiert ist, leigt und
- dass die Lichtdetektoren (28, 28') in einer Dimension ausgedehnter, oder mindestens gleich gross wie der in die Messvorrichtung (20) einfallende, und am optischen System (61, 81) abgelenkte Lichtstrahl (33, 33') ist.

18. Vorrichtung nach Anspruch 17, dadurch gekennzeichnet, dass der Hohlspiegel (61, 81) parabolische Form aufweist.

19. Vorrichtung nach einem der Ansprüche 17 oder 18, dadurch gekennzeichnet, dass der Hohlspiegel (61, 81) ein zylindrischer Hohlspiegel (61) ist.

20. Vorrichtung nach einem der Ansprüche 17 oder 18, dadurch gekennzeichnet, dass der Hohlspiegel (61, 81) ein bifokaler Hohlspiegel (81) ist.

21. Vorrichtung nach einem oder mehreren der Ansprüche 17 bis 20, dadurch gekennzeichnet, dass in dem auf das Objekt auftreffenden Lichtstrahl in dem von Messobjekt (11) zurückgeworfenen Lichtstrahl (33') hinter dem Hohlspiegel (61, 81) Polarisationsmittel (65, 65)' vorhanden sind.

22. Vorrichtung nach Anspruch 21, dadurch gekennzeichnet, dass die Polarisationsmittel (65) derart angebracht sind, dass auf dem Objekt auftreffende Lichtstrahl bezüglich der Symmetrieebene des Hohlspiegels (61, 81) unter 45° polarisiert ist.

23. Vorrichtung nach Anspruch 22, dadurch gekennzeichnet, dass das Polarisationsmittel (65) ein Polarisator ist.

24. Vorrichtung nach Anspruch 21, dadurch gekennzeichnet, dass das Polarisationsmittel (65) eine im bereits polarisierten Lichtstrahl befindliche Lambda-Viertel-Platte ist.

25. Vorrichtung nach einem der Ansprüche 21 bis 24, dadurch gekennzeichnet, dass die Lichtquelle der Messvorrichtung selbst einen Polarisator enthält.

26. Vorrichtung nach einem oder mehreren der Ansprüche 17 bis 20, dadurch gekennzeichnet, dass vor dem Hohlspiegel (61, 81) im Strahlengang (33) ein, aus einem Linear- und einem Zirkular-Polarisator bestehendem, optischen Isolator (64) angeordnet ist.

27. Vorrichtung nach einem oder mehreren der Ansprüche 17 bis 25, dadurch gekennzeichnet, dass der Strahlteiler (26) annähernd senkrecht zur optischen Achse (16) im fokussierten Lichtstrahl (33) angeordnet ist.

28. Vorrichtung nach einem oder mehreren der Ansprüche 17 bis 27, dadurch gekennzeichnet, dass die lichtempfindlichen Flächen (122, 122') der Lichtdetektoren (28,28') derart bemessen sind, dass für den Fall, dass die Messfläche von der Messvorrichtung einen vorgegebenen Abstand hat, in der sog. Neutralebene (121) liegt, die Berandung des vom Hohlspiegel fokussierten Strahles (33') genau mit der Berandung der Lichtdetektoren (28, 28') übereinstimmen.

29. Vorrichtung nach einem oder mehreren der Ansprüche 17 bis 27, dadurch gekennzeichnet, dass die Lichtdetektoren (28, 28') derart mit Blenden (123, 123') versehen sind, dass für den Fall, dass die Messfläche von der Messvorrichtung einen vorgegebenen Abstand hat, in der sog. Neutralebene (121) liegt, die Berandung des vom Hohlspiegel (61, 81) fokussierten Strahles (33') genau mit der Berandung der Blenden (123, 123') der Lichtdetektoren (28, 28') übereinstimmen.

30. Vorrichtung nach einem oder mehreren der Ansprüche 21 bis 25, dadurch gekennzeichnet, dass die Polarisatoren (65, 65'), resp. Lambda-Viertel-Platten (141') mit einer Drehvorrichtung versehen sind.

31. Vorrichtung nach Anspruch 30, dadurch gekennzeichnet, dass die Drehvorrichtung (141, 141') der Polarisatoren (65,65') resp. der Lambda-Viertel-Platten (141, 141') Vibrationsbewegungen zulassen.

32. Vorrichtung nach einem der Ansprüche 17 bis 31 dadurch gekennzeichnet, dass die Lichtquelle 21 eines Laserlichtquelle ist.

33. Verwendung des Verfahrens und der entsprechenden Vorrichtung nach den Ansprüchen 1 bis 32, dadurch gekennzeichnet, dass Distanzen im Bereiche 0 bis 30 cm gemessen werden.

34. Verwendung des Verfahrens und der entsprechenden Vorrichtung nach den Ansprüchen 1 bis 32, dadurch gekennzeichnet, dass die Vorrichtung in der Robotik eingesetzt wird.

$$\frac{E_1}{E_2} = \frac{\sqrt{2}^2}{\sqrt{1}^2}$$

FIG. 1

FIG. 2

FIG. 3

FIG. 4

FIG. 5

FIG. 6

FIG. 7

FIG. 8

EP 0 322 356 A2

FIG. 9

FIG. 10

FIG. 11

FIG. 12

FIG. 13

FIG. 14